# EUROPÄISCHE PATENTSCHRIFT

(11) **EP 3 600 822 B1**
(45) Veröffentlichungstag und Bekanntmachung des Hinweises auf die Patenterteilung: **20.09.2023**
(21) Anmeldenummer: 18712156.1
(22) Anmeldetag: 15.03.2018
(51) Int. Cl.: B29C 45/16, B29L 31/34, B29K 75/00

(54) **POLYURETHANBASIERTES DISPLAY, VERFAHREN ZUR HERSTELLUNG DESSELBEN UND VERWENDUNG DES POLYURETHANBASIERTEN DISPLAYS UND FAHRZEUG MIT EINEM POLYURETHANBASIERTEN DISPLAY**
POLYURETHANE-BASED DISPLAY, METHOD FOR PRODUCTION THEREOF, AND USE OF THE POLYURETHANE-BASED DISPLAY AND VEHICLE WITH A POLYURETHANE-BASED DISPLAY
DISPOSITIF D'AFFICHAGE À BASE DE POLYURÉTHANE, PROCÉDÉ DE FABRICATION ASSOCIÉ ET UTILISATION DU DISPOSITIF D'AFFICHAGE À BASE DE POLYURÉTHANE ET VÉHICULE COMPORTANT UN DISPOSITIF D'AFFICHAGE À BASE DE POLYURÉTHANE

(30) Priorität: 28.03.2017 DE 102017205202
(43) Veröffentlichungstag der Anmeldung: 05.02.2020
(73) Patentinhaber: Bayerische Motoren Werke Aktiengesellschaft, 80809 München (DE)
(72) Erfinder: HAIRER, Gabriel, 80807 München (DE); STROLZ, Michael, 80809 München (DE)
(86) Internationale Anmeldenummer: PCT/EP2018/056523
(87) Internationale Veröffentlichungsnummer: WO 2018/177759

(56) Entgegenhaltungen:
- EP-A1- 2 684 744
- EP-A1- 2 765 570
- EP-A1- 2 765 570
- WO-A1-2016/008790
- DE-A1-102013 114 276
- DE-A1-102013 114 276

## Beschreibung

Die vorliegende Erfindung betrifft ein polyurethanbasiertes Display, insbesondere für Fahrzeuge, sowie ein Verfahren zur Herstellung eines solchen Displays als auch die Verwendung eines solchen Displays und ein Fahrzeug mit einem polyurethanbasierten Display.

Keramikbasierte Materialien finden weitläufig Anwendung als Displays von Betätigungsvorrichtungen in Fahrzeugen. Derartige Keramikmaterialien verleihen den Betätigungsvorrichtungen, wie beispielsweise Gangwahlschaltern, eine angenehme Haptik und zudem eine hochwertige Optik. Allerdings sind Keramikkomponenten teuer, weswegen für die Darstellung der Displaysymboliken häufig zusätzliche Kunststoffkomponenten verwendet werden. Bekannt sind zum Beispiel Displayelemente von Betätigungsvorrichtungen in Fahrzeugen, bei denen Kunststoffsymboliken mittels Spritzguss in entsprechend symbolförmige Aussparungen von Keramikoberflächen eingebracht werden. Dies bringt jedoch mehrere Nachteile mit sich. Zum einen ist ein hoher Entwicklungsaufwand nötig und die optische Wertigkeit dieser Symboliken ist zudem nicht gegeben, da die Keramikstege sichtbar sind. Weiterhin verursacht die Erzeugung der symbolförmigen Aussparungen in den Keramikoberflächen einen hohen Ausschuss der Keramikmaterialien. Außerdem ist die Stabilität dieser Displayelemente gering, da die Keramikstege, beispielsweise das Dreieck im Buchstaben "A", leicht brechen. Durch die scharfen Kanten, die an der Keramikoberfläche bei der Erzeugung der symbolförmigen Aussparungen entstehen, ist auch ein zusätzlicher Prozessschritt des Schleifens notwendig. Dies führt auch zu höheren Werkzeugkosten. DE102013214544 A1 beschreibt ein Keramikformteil zur Anzeige, bei dem eine Aussparung in Form einer Symbolik und eine Intarsie in Plättchenform verwendet werden. Hier werden die Nachteile der Keramikstege dadurch gelöst, dass eine Intarsie in Form eines Plättchens, wie zum Beispiel das Dreieck im Buchstaben "A", durch den Kunststoff für die symbolförmige Aussparung hinterspritzt wird. Allerdings sind derartige Intarsien sehr kosten- und zeitaufwändig herzustellen. Auch die Langzeithaftung dieser plättchenförmigen Intarsien bei häufiger mechanischer Belastung sowie die Kratzfestigkeit des Formteils sind nicht zufriedenstellend. Zudem kann durch das Aufbringen der Plättchen auf den Kunststoff keine ansprechende Optik und Haptik bei den resultierenden Symboliken erzeugt werden. Dieses Verfahren stößt außerdem bei der Darstellung unterschiedlicher Farben, Muster und Designs schnell an seine prozessökonomischen Grenzen. Weiterhin werden mit Symbolen bedruckte Folien, die einen Kratzschutz aufweisen, auf Keramikoberflächen geklebt. Hierbei müssen jedoch teure Spezialklebstoffe für eine dauerhafte mechanische Stabilität verwendet werden und die Entwicklungs- und Herstellungskosten für solche Displayelemente sind hoch. Zudem bestehen bei derartigen Folien Designeinschränkungen, da die kratzfeste Beschichtung nicht zufriedenstellend an Designs angepasst werden kann.

EP 2 765 570 A1 offenbart ein beleuchtbares Anzeigeelement insbesondere für ein Fahrzeug, das eine flächig ausgebildete Abdeckung mit einer Sichtseite, einer Rückseite und zumindest einem Durchbruch, zumindest ein graphisches Element, welches an der Sichtseite der Abdeckung vorgesehen und/oder ausgebildet ist; sowie ein Leuchtmittel umfasst, welches zum Beleuchten des Durchbruchs dient; wobei das graphische Element vom zumindest einen Durchbruch zumindest teilweise derart umschlossen ist, dass das graphische Element zumindest teilweise vom Licht des Leuchtmittels umstrahlbar ist, wobei die Abdeckung zumindest eine sich nach oben hin erstreckende Erhebung aufweist, innerhalb welcher das graphische Element oberhalb des zumindest einen Durchbruchs angeordnet ist, und/oder wobei die Abdeckung zumindest eine sich nach unten hin erstreckende Vertiefung aufweist, innerhalb welcher das graphische Element unterhalb des zumindest einen Durchbruchs angeordnet ist.

DE 10 2013 114276 A1 offenbart ein Verfahren zum Herstellen eines Kunststoffformteils, mit den Schritten: a) Bereitstellen einer ersten Dekorfolie, welche zumindest partiell eine opaken Beschichtung aufweist; b) Einbringen zumindest eines Dekorelements eines Dekors in die erste Dekorfolie durch Bearbeiten mittels eines Bearbeitungswerkzeugs; c) Bereitstellen einer zweiten Dekorfolie; d) Einlegen der Dekorfolien in eine Spritzgussform mit einer ersten und zweiten Formhälfte, die gemeinsam eine Kavität zum Abformen des Kunststoffformteils ausbilden, wobei die erste Dekorfolie an einer ersten Wandung der Kavität und die zweite Dekorfolie an einer zweiten, der ersten Wandung gegenüber liegenden Wandung der Kavität angebracht wird; und e) Hinterspritzen der Dekorfolien mit einer Kunststoffmasse, so dass die erste Dekorfolie eine erste Oberfläche und die zweite Dekorfolie eine zweite, der ersten Oberfläche gegenüberliegende Oberfläche des Kunststoffformteils ausbildet.

WO 2016/008790 A1 beschreibt ein Verfahren zur Herstellung eines Kunststoff-Fahrzeuganbauteils, wobei eine polymere Folie, die einen opaken oder teilopaken Aufdruck oder eine Farbpigmentierung aufweist, in ein Spritzgusswerkzeug eingelegt wird, die polymere Folie mit einem optisch transparenten polymeren Deckteil hinterspritzt wird, ein polymeres Trägerteil zumindest auf einen Teil der Oberfläche des polymeren Deckteils, die von der polymeren Folie abgewandt ist, aufgespritzt wird und eine Schutzschicht zumindest auf die polymere Folie aufgebracht wird.

EP 2 684 744 A1 offenbart ein Zierteil mit einem Trägerteil aus einem im Spritzgussverfahren hergestellten thermoplastischen Kunststoffteil aus schlagzähem Material und einer Deckschicht. Die Deckschicht ist zumindest aus Polyurea oder Polyurethan gebildet ist und hat eine Dicke von 100 µm bis 600 µm. Das Trägerteil wurde mit der Deckschicht auf einer Spritzgießmaschine in aufeinanderfolgenden oder parallellaufenden Prozessen, insbesondere in einem gemeinsamen Spritzgussprozess, hergestellt. Ein von Trägerteil und Deckschicht gebildeter Rand ist zumindest abschnittsweise in Randabschnitten schräg ausgebildet und das Trägerteil und die Deckschicht bilden in diesen Randabschnitten am Rand eine Fläche oder es ist zwischen Trägerteil und Deckschicht eine Stufe ausgebildet.

Ausgehend von diesem Stand der Technik ist es Aufgabe der vorliegenden Erfindung, ein Display, insbesondere für Fahrzeuge anzugeben, das robust bzw. mechanisch stabil und kratzfest ist, das günstig und unter geringeren Entwicklungs- und Herstellungskosten herstellbar ist und mehr Freiheitsgrade hinsichtlich des Designs aufweist. Ferner ist es Aufgabe der vorliegenden Erfindung, ein Verfahren zur Herstellung eines Displays anzugeben, das in wenigen Schritten unter Einsparung von Entwicklungs- und Herstellungskosten ein robustes bzw. mechanisch stabiles und kratzfestes Display erzeugt. Darüber hinaus ist es Aufgabe der vorliegenden Erfindung ein Fahrzeug mit dem polyurethanbasierten Display und eine Verwendung für ein solches Display anzugeben.

Die Aufgabe wird durch das erfindungsgemäße polyurethanbasierte Display für ein Fahrzeug gemäß Anspruch 1 gelöst. Das polyurethanbasierte Display umfasst ein Dekorelement mit mindestens einer Aussparung, wobei in der Aussparung mindestens eine bedruckte Folie derart angeordnet ist, dass der bedruckte Teil sichtbar ist und wobei die Folie mit einer ersten Polyurethanschicht beschichtet ist.

Das Dekorelement ist ein Basismaterial bzw. Trägerbauteil für das Display, welches dazu beiträgt, dem Display eine hochwertige Optik und eine für den Anwender angenehme Haptik zu verleihen und ist somit gut geeignet für Displayelemente, beispielsweise in Fahrzeugen. Das Dekorelement umfasst Keramik, Holz, Holzfurnier, Glas, Stein oder eine Kombination davon. Dadurch ermöglicht die vorliegende Erfindung das Bereitstellen eines Displays in einer Vielzahl von unterschiedlichen Basisdesignvarianten, welche als Dekorelemente insbesondere in Fahrzeugen infrage kommen und für eine angenehme Haptik und hochwertige Optik sorgen. Für besonders hohe und haptische Ansprüche kann das Dekorelement insbesondere aus Keramik bestehen.

Um ein mechanisch stabiles Display bereitzustellen, ist die bedruckte Folie sichtbar in mindestens einer Aussparung des Dekorelements angeordnet. Die Aussparung ist hier eine Vertiefung in der Oberfläche des Dekorelements, die jede beliebige Form haben kann und zur Aufnahme der bedruckten Folie ausgebildet ist.

Die bedruckte Folie ist im Einzelnen nicht beschränkt. Der enthaltene Druck dient insbesondere der Information eines Anwenders und umfasst hierzu geeignete Zeichen.

Die erste Polyurethanschicht ist auf die bedruckte Folie aufgebracht. Der mit der ersten Polyurethanschicht beschichtete Teil der bedruckten Folie wird dadurch selektiv kratzfest, wodurch Material eingespart werden kann, wenn beispielsweise nicht die komplette bedruckte Folie aufgrund von mechanischen Belastungen das Erfordernis einer hohen Kratzfestigkeit erfüllen muss. Wesentlich ist hierbei, dass der bedruckte Teil der Folie mit der ersten Polyurethanschicht beschichtet ist, um somit eine dauerhafte Anzeigefunktion zu gewährleisten. Durch die Beschichtung einer bedruckten Folie mit einer ersten Polyurethanschicht können höhere Designfreiheitsgrade möglich werden, da die bedruckte Folie nicht spezifisch im Hinblick auf eine hohe Stabilität ausgebildet sein muss, da diese, und zudem eine hohe Kratzfestigkeit durch die erste Polyurethanschicht dauerhaft erzielt werden können.

Das Dekorelement umfasst Löcher und/oder Dornen, durch die die erste Polyurethanschicht fixiert wird. Hierdurch wird die erste Polyurethanschicht mechanisch stabilisiert.

Durch die Struktur und Ausgestaltung der Elemente des erfindungsgemäßen polyurethanbasierten Displays, ist dieses robust bzw. mechanisch stabil und kratzfest und zudem unter geringen Entwicklungs- und Herstellkosten herstellbar. Ferner kann das Display in beliebiger Gestaltung ausgebildet sein und besitzt daher einen hohen Grad an Freiheitsgraden hinsichtlich des Designs.

Die Unteransprüche haben vorteilhafte Weiterbildungen der vorliegenden Erfindung zum Inhalt.

Gemäß einer vorteilhaften Weiterbildung ist die bedruckte Folie vollständig mit der ersten Polyurethanschicht beschichtet. Dadurch kann die Kratzfestigkeit des Displays signifikant erhöht werden. Zudem trägt die vollständige Beschichtung zu einer Erhöhung der mechanischen Stabilität bei, da die erste Polyurethanschicht eine umfassende, insbesondere formschlüssige, Verbindung mit dem Dekorelement eingeht.

Die bedruckte Folie kann mit jeglicher Art von Mustern bedruckt werden, wobei die Bedruckung dieser Muster unabhängig von dem Rest des polyurethanbasierten Displays ist. Die bedruckte Folie ist zudem in jede Art von Aussparung einfach einbringbar. Dies trägt zu erhöhten Designfreiheitsgraden bei und senkt die Entwicklungskosten. Die bedruckte Folie kann beispielsweise aus Kunststoff oder weiteren bekannten und günstigen Folienmaterialien hergestellt sein.

Um eine möglichst hohe Designvariabilität für das erfindungsgemäße Display zu schaffen, umfasst die bedruckte Folie vorteilhaft Buchstaben, Abbildungen, Zahlen oder eine Kombination daraus. Somit sind Designs und Muster jeder Art möglich. Auch internationale, z.B. asiatische, insbesondere chinesische, japanische, indische oder arabische, Buchstaben, sind möglich, was die Akzeptanz des erfindungsgemäßen polyurethanbasierten Displays auf dem Weltmarkt verbessert. Weiterhin können die Abbildungen farbig oder schwarzweiß sein.

Eine weitere vorteilhafte Weiterbildung der Erfindung ist dadurch gekennzeichnet, dass eine zweite Polyurethanschicht zwischen der bedruckten Folie und der ersten Polyurethanschicht und/oder zwischen der bedruckten Folie und dem Dekorelement angeordnet ist. Durch die zweite Polyurethanschicht zwischen der Folie und dem Dekorelement wird die Folie zwischen den beiden Polyurethanschichten eingeklemmt, was zu einer besseren Fixierung der bedruckten Folie und somit zu einer verbesserten mechanischen Stabilität führt. Durch eine zweite Polyurethanschicht zwischen der bedruckten Folie und der ersten Polyurethanschicht wird eine zusätzliche Fixierung der bedruckten Folie erreicht. Auch kann durch das Vorsehen einer zweiten Polyurethanschicht die Haptik des erfindungsgemäßen Displays verbessert werden.

Um den Herstellungsprozess des erfindungsgemäßen polyurethanbasierten Displays kosteneffizienter und umweltfreundlicher zu machen, ist eine Verbindung zwischen der bedruckten Folie und dem Dekorelement und/oder eine Verbindung zwischen der ersten Polyurethanschicht und der bedruckten Folie und/oder eine Verbindung zwischen der zweiten Polyurethanschicht und dem Dekorelement und/oder eine Verbindung zwischen der zweiten Polyurethanschicht und der bedruckten Folie frei von Klebstoff. Dadurch entfällt insbesondere ein Klebeschritt im Herstellungsprozess. Auch kann somit eine Langzeitstabilität des polyurethanbasierten Displays verbessert werden, da Klebstoffe üblicherweise zu Versprödung neigen.

Weiter vorteilhaft umfasst das Dekorelement Löcher und/oder Dornen, durch die die zweite Polyurethanschicht zusätzlich fixiert wird. Hierdurch wird die zweite Polyurethanschicht mechanisch stabilisiert.

Eine weitere vorteilhafte Weiterentwicklung der vorliegenden Erfindung zeichnet sich durch Löcher und/oder Dornen aus, durch die die bedruckte Folie fixiert und somit mechanisch stabilisiert wird.

Durch die vorstehend beschriebenen Löcher und Dornen wird die erste Polyurethanschicht und kann optional die zweite Polyurethanschicht oder die bedruckte Folie formschlüssig mit dem die Dornen und/oder Löcher enthaltenden Element verbunden werden. Weiterhin kann insbesondere auch die Folie durch eine formschlüssige Verbindung, welche die erste Polyurethanschicht mit den Wänden der Aussparung, Löchern, Dornen oder einer Kombination davon eingeht, fixiert werden.

Um die Sichtbarkeit der bedruckten Folie zu maximieren, ist die erste und/oder die zweite Polyurethanschicht vorteilhaft transparent.

Ferner erfindungsgemäß wird ein Verfahren zur Herstellung eines wie vorstehend offenbarten polyurethanbasierten Displays beschrieben. Das Verfahren umfasst in einem ersten Schritt das Vorbereiten des Dekorelements mit einer Aussparung. Dafür kommen sämtliche bekannte Materialbearbeitungsprozesse wie etwa Sägen, Schleifen, Fräsen, Drehen oder 3D-Drucken oder Kombinationen davon infrage. Die Aussparung kann in Form eines Teilellipsoids, einer Halbkugel oder in anderen geometrischen Formen ausgebildet werden. Durch die Entkopplung der Bearbeitung des Dekorelements von der Bearbeitung der übrigen Displaykomponenten kann die Komplexität des Verfahrens gesenkt werden, was sich positiv auf die Entwicklungs- und Herstellungskosten auswirkt.

In einem zweiten Schritt wird die bedruckte Folie in die Aussparung des Dekorelements eingebracht. Die bedruckte Folie ist hierbei unabhängig von der Form der Aussparung einbringbar, was zu erhöhten Designfreiheitsgraden beiträgt. Dieser Vorteil wird zudem dadurch erzielt, dass die Folie beliebig bedruckt sein kann. Die bedruckte Folie kann vorteilhaft über Dornen oder Löcher an der Aussparung befestigt werden. Die Folie kann entsprechende Maßnahmen, wie beispielsweise Vorsprünge aufweisen, um mit vorgesehenen Löchern formschlüssig verbunden zu werden. Dadurch kann die bedruckte Folie mechanisch stabil fixiert werden und kann somit nicht mehr verrutschen.

In einem dritten Schritt wird eine erste Polyurethanschicht auf die bedruckte Folie aufgebracht. Dies kann beispielsweise über ein Spritzgussverfahren geschehen und hat zwei Funktionen: Zum einen stellt die erste Polyurethanschicht eine kratzfeste Oberfläche für beanspruchte Bereiche der bedruckten Folie bereit, was dazu führt, dass die Folie vor Verschleiß geschützt wird. Dies kann insbesondere für die Bereiche der bedruckten Folie geschehen, die einer hohen mechanischen Beanspruchung unterliegen. Zum anderen kann die bedruckte Folie formschlüssig durch die erste Polyurethanschicht fixiert werden, wenn diese beispielsweise eine formschlüssige Verbindung mit den Wänden der Aussparung des Dekorelements oder mit Dornen und Löchern des Dekorelements oder mit einer Kombination davon eingeht.

Gemäß einer vorteilhaften Weiterentwicklung des erfindungsgemäßen Verfahrens, wird die erste Polyurethanschicht so aufgebracht, dass sie die Folie vollständig bedeckt, wodurch ein erhöhter Kratzschutz und somit eine erhöhte Robustheit resultiert und wodurch noch stärkere formschlüssige Verbindungen der ersten Polyurethanschicht mit den Wänden, Dornen oder Löchern des Dekorelements oder Kombinationen davon eingegangen werden können.

Eine weitere vorteilhafte Weiterbildung ist dadurch gekennzeichnet, dass nach dem Aufbringen der ersten Polyurethanschicht auf die bedruckte Folie ein vierter Schritt zum Schleifen und/oder Polieren der Oberfläche, die aus der ersten Polyurethanschicht in der Aussparung des Dekorelements und des Dekorelements gebildet wird, vorgesehen ist. Dadurch lässt sich das optische Bild des polyurethanbasierten Displays abrunden, wobei zusätzlich eine angenehme Haptik erreicht werden kann.

Eine weitere vorteilhafte Weiterbildung der Erfindung zeichnet sich dadurch aus, dass das Aufbringen der ersten Polyurethanschicht im dritten Schritt mittels Spritzgießen erfolgt. Da sich Polyurethan einfach mit dieser Technik verarbeiten lässt, folgt daraus eine Einsparung der Herstellungskosten unter präzisionsgenauer Applikation der ersten Polyurethanschicht.

Weiter vorteilhaft wird eine zweite Polyurethanschicht vor oder nach dem zweiten Schritt des Einbringens der bedruckten Folie in die Aussparung des Dekorelements durch Spritzgießen eingebracht. Dies dient der zusätzlichen Stabilisierung des Displays und verbessert zusätzlich die Haptik desselben. Auch kann die Folie im Fertigungsverfahren z.B. zwischen der ersten und zweiten Polyurethanschicht eingeklemmt werden, wodurch eine zusätzliche mechanische Fixierung stattfindet. Insbesondere vorteilhaft ist daher eine vollständige Unterspritzung der bedruckten Folie mit der zweiten Polyurethanschicht.

Weiter vorteilhaft ist das Verfahren frei von der Verwendung von Klebstoff, wodurch Entwicklungs- und Herstellungskosten eingespart werden können und wodurch positiv zur Umweltfreundlichkeit des Prozesses beigetragen wird.

Weiter vorteilhaft wird das Dekorelement im ersten Schritt gebrannt, um diesem eine besondere Stabilität zu verleihen, was beispielsweise bei Keramikgrünlingen der Fall sein kann.

Ferner erfindungsgemäß wird auch eine Verwendung eines wie vorstehend offenbarten polyurethanbasierten Displays in einer Instrumententafel für Fahrzeuge oder in einem Gangwahlschalter oder in einer Türverkleidung für Fahrzeuge angegeben.

Durch diese erfindungsgemäße Verwendung können Instrumententafeln, Gangwahlschalter oder Türverkleidungen für Fahrzeuge mit hoher Robustheit, ansprechender Optik und angenehmer Haptik, unter geringen Herstellungs- und Entwicklungskosten und mit vielen Designfreiheitsgraden bereitgestellt werden.

Erfindungsgemäß wird auch ein Fahrzeug beschrieben, das das vorstehend offenbarte polyurethanbasierte Display umfasst. Es zeichnet sich durch eine gute Kratzfestigkeit und hohe Designfreiheitsgrade aus.

Die für das erfindungsgemäße polyurethanbasierte Display beschriebenen Vorteile, vorteilhaften Effekte und Weiterbildungen finden auch Anwendung auf das erfindungsgemäße Verfahren zur Herstellung eines polyurethanbasierten Displays, das erfindungsgemäße Fahrzeug und die erfindungsgemäße Verwendung eines polyurethanbasierten Displays.

Weitere Einzelheiten, Merkmale und Vorteile der Erfindung ergeben sich aus der nachfolgenden Beschreibung und den Figuren. Es zeigen:
- Figur 1: eine Schnittansicht eines polyurethanbasierten Displays gemäß einer Ausführungsform der Erfindung,
- Figur 2: ein schematisches Ablaufdiagramm zur Veranschaulichung eines Verfahrens zur Herstellung eines polyurethanbasierten Displays gemäß einer Ausführungsform der Erfindung und
- Figur 3: eine schematische Darstellung eines Gangwahlschalters mit einem polyurethanbasierten Display gemäß einer Ausführungsform der Erfindung.

Die vorliegende Erfindung wird anhand von drei Ausführungsbeispielen im Detail erläutert. In den Figuren sind alle wesentlichen Merkmale der Erfindung dargestellt. Alle übrigen Merkmale sind der Übersichtlichkeit halber weggelassen.

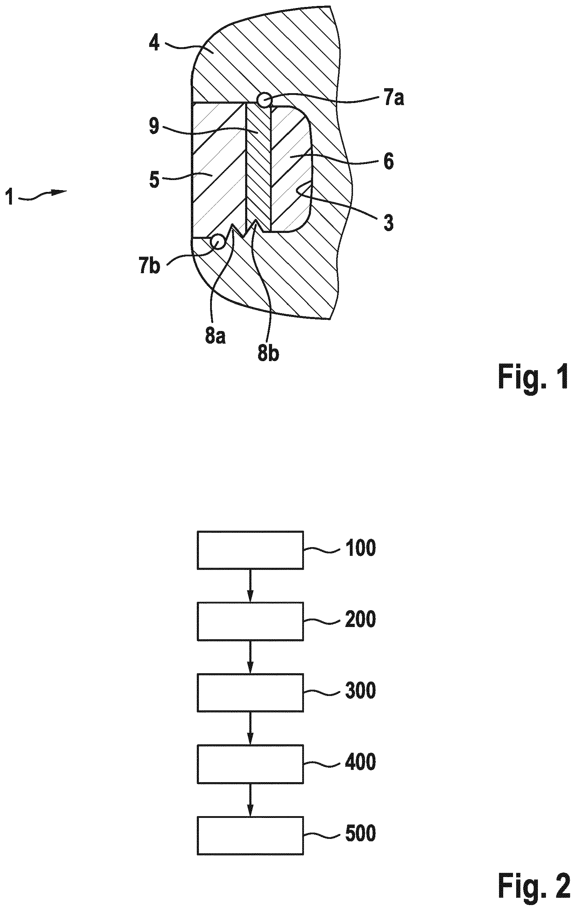

Figur 1 zeigt im Detail eine Schnittansicht eines polyurethanbasierten Displays 1 gemäß einer Ausführungsform der Erfindung. Das polyurethanbasierte Display 1 kann zur Anordnung in einem Fahrzeug, beispielsweise für eine Betätigungsvorrichtung in einer Instrumententafel, konzipiert sein. Das Display 1 umfasst ein Dekorelement 4, das mindestens eine Aussparung 3 aufweist, in der eine bedruckte Folie 9 derart angeordnet ist, dass der bedruckte Teil sichtbar ist, wobei die bedruckte Folie 9 vollständig mit einer ersten Polyurethanschicht 5 beschichtet ist. Hierdurch wird das polyurethanbasierte Display 1 besonders kratzfest. Die erste Polyurethanschicht 5 kann mit bekannten Verfahren, wie beispielsweise mit einem Spritzgussverfahren, aufgebracht werden, da Polyurethan besonders einfach mit dieser Technik zu verarbeiten ist.

Die bedruckte Folie 9 umfasst Abbildungen, Zahlen, Buchstaben oder eine Kombination daraus, wodurch Designs jeglicher Art bei geringen Herstellungs- und Entwicklungskosten möglich sind. Die bedruckte Folie 9 kann mit allen bekannten Techniken des Foliendrucks einfach hergestellt werden. Weiterhin ist die bedruckte Folie durch ihre Flexibilität in jede Art von Aussparung 3 einbringbar, wodurch die Designfreiheitsgrade erhöht werden. Die bedruckte Folie kann beispielsweise Kunststoff oder andere bekannte und günstige Folienmaterialien umfassen.

Das Dekorelement 4 umfasst Keramik, Holz, Holzfurnier, Glas, Stein oder eine Kombination davon, insbesondere Keramik, und kann durch bekannte Arten der Materialbearbeitung, wie z.B. Schleifen, Bohren, Drehen, Sägen oder Fräsen in jede beliebige Form gebracht werden, wodurch die Haptik und die Optik des Displays hochwertig sind.

Die Aussparung 3 liegt in Form einer Kavität im Dekorelement 4 vor und dient zur Verbindung des Dekorelements 4 mit der bedruckten Folie 9 und der ersten Polyurethanschicht 5. Die Aussparung 3 kann z.B. eine Halbkugelform, eine Sacklochbohrung, eine Teilellipsoidenform oder weitere geometrische Formen aufweisen und kann mit herkömmlichen Techniken wie Bohren oder Schleifen oder Fräsen erzeugt werden. Weiterhin weist die Aussparung 3 Löcher 7a, 7b und Dornen 8a, 8b auf, wodurch die mechanische Stabilität des polyurethanbasierten Displays, wie in der Folge erläutert, erhöht wird.

Zwischen der bedruckten Folie 9 und dem Dekorelement 4 ist in Figur 1 eine zweite Polyurethanschicht 6 angeordnet. Hierbei wird die bedruckte Folie 9 zwischen der ersten Polyurethanschicht 5 und der zweiten Polyurethanschicht 6 sandwichartig eingeklemmt, was eine zusätzliche Stabilisierung der bedruckten Folie 9 zufolge hat und diese gegen Verrutschen sichert. Zwischen der bedruckten Folie 9 und der ersten Polyurethanschicht 5 kann ebenfalls eine zusätzliche zweite Polyurethanschicht (hier der Übersichtlichkeit halber nicht gezeigt) angeordnet sein. Diese kann durch eine formschlüssige Verbindung zwischen dieser Schicht und der Aussparung 3 für eine weitere Stabilisierung der bedruckten Folie 9 sorgen.

Die Verbindung zwischen der bedruckten Folie 9 und dem Dekorelement 4 und die Verbindung zwischen der ersten Polyurethanschicht 5 und dem Dekorelement 4 und der zweiten Polyurethanschicht 5 und dem Dekorelement 4 ist jeweils frei von Klebstoff, wodurch sowohl Kosten für teure Klebstoffe eingespart werden als auch der zusätzliche Verfahrensschritt des Klebens entfällt. Daher ist das polyurethanbasierte Display 1 umweltfreundlich herstellbar.

Das Dekorelement 4 umfasst Löcher 7b und Dornen 8a, um die erste Polyurethanschicht 5 besser zu fixieren. Dadurch entstehen form- und ggf. auch kraftschlüssige Verbindungen, indem die erste Polyurethanschicht 5 beispielsweise in die Löcher 7b gespritzt ist oder um die Dornen 8a herum angeordnet ist. Derartige Löcher und Dornen können mithilfe von vorgehend offenbarten Techniken hergestellt werden. Somit ist die erste Polyurethanschicht mechanisch stabilisiert und gegen ein Herausfallen gesichert. Dies ist insbesondere dann von Vorteil, wenn sich die erste Polyurethanschicht 5 durch thermischen Stress, der beispielsweise durch die Umgebungstemperatur verursacht wird, verzieht.

Aus demselben Grund umfasst das Dekorelement 4 Löcher 7a und Dornen 8b, um die bedruckte Folie 9 form- und ggf. auch kraftschlüssig zu fixieren. Dabei können an der Folie zusätzliche bekannte Maßnahmen, wie etwa Stifte oder Vorsprünge (der Übersichtlichkeit halber nicht gezeigt), angebracht sein, um sie mit den Löchern 7a zu verbinden. Die Dornen 8b können die Folie entweder klemmen oder zur Fixierung einstechen.

Die erste Polyurethanschicht 5 und die zweite Polyurethanschicht 6 sind transparent, um die Sichtbarkeit der bedruckten Folie zu maximieren.

Das polyurethanbasierte Display 1 zeichnet sich dadurch aus, dass es kostengünstig, d.h. ohne hohe Herstellungs- und Entwicklungskosten, herstellbar, kratzfest und mechanisch stabil ist und über hohe Designfreiheitsgrade verfügt.

Im Detail gibt Figur 2 eine Übersicht über Schritte eines Verfahrens zur Herstellung eines polyurethanbasierten Displays 1 gemäß einer Ausführungsform der Erfindung. In einem ersten Schritt 100 wird das Dekorelement 4 vorbereitet. Dafür kommen sämtliche bekannte Materialbearbeitungsprozesse wie etwa Sägen, Schleifen, Fräsen, Drehen oder 3D-Drucken oder Kombinationen davon infrage. Weiterhin kann das Dekorelement 4 gebrannt werden, was besonders für die Stabilität des Dekorelements 4 von Vorteil ist, wenn dieses aus Keramik besteht. Hierbei wird auch eine Aussparung 3 für das Dekorelement 4 erzeugt.

In einem zweiten Schritt 200 wird eine zweite Polyurethanschicht 6 in die Aussparung 3 des Dekorelements durch Spritzgießen eingebracht, wodurch die Basis für die, wie vorstehend beschriebe, sandwichartige und sehr stabile Fixierung der Folie geschaffen wird. Dieser Schritt ist schnell und kostengünstig durchführbar.

In einem dritten Schritt 300 wird die bedruckte Folie auf die unterspritzte zweite Polyurethanschicht 6 aufgebracht. Das Spritzgießen der zweiten Polyurethanschicht 6 kann vorzugsweise im zweiten Schritt 300 auch so erfolgen, dass die komplette bedruckte Folie 9 unterspritzt wird. Da die Folie günstig herstellbar ist, sind nicht nur die Entwicklungskosten geringer, sondern es wird auch ein hoher Designfreiheitsgrad durch die Flexibilität der bedruckten Folie 9 gewährleistet, da sich diese an jegliche Aussparungsformen anpassen kann.

In einem vierten Schritt 400 wird die erste Polyurethanschicht 5 mittels Spritzgießen so auf die bedruckte Folie 9 aufgebracht, dass sie diese vollständig bedeckt. Dadurch werden die Vorteile erzielt, dass die bedruckte Folie 9 eine kratzfeste Beschichtung hat, was ihr eine hohe Robustheit verleiht. Weiterhin ist die bedruckte Folie 9 nunmehr zwischen der ersten Polyurethanschicht 5 und der zweiten Polyurethanschicht 6 sandwichartig fixiert, was ihr zudem eine hohe mechanische Stabilität verleiht.

In einem fünften Schritt 500 wird die Oberfläche, die aus der ersten Polyurethanschicht 5 in der Aussparung 3 des Dekorelements 4 und des Dekorelements 4 resultiert, geschliffen oder poliert, was durch konventionelle Schleif- oder Poliermethoden erreicht werden kann, wodurch eine angenehme Haptik und ansprechende Optik des polyurethanbasierten Displays 1 erzeugt wird.

Das hier dargestellte Verfahren zeichnet sich durch eine einfache Durchführbarkeit und durch geringe Herstellungs- und Entwicklungskosten aus. Durch das erfindungsgemäße Verfahren kann ein robustes polyurethanbasiertes Display erzeugt werden, wobei dieses Verfahren ein hohes Maß an Designfreiheitsgraden bietet.

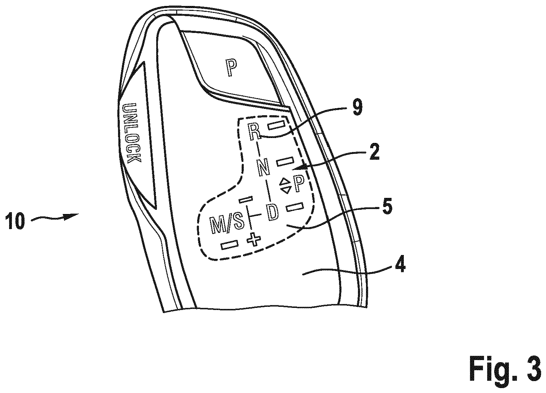

Figur 3 zeigt einen Gangwahlschalter 10 für Fahrzeuge, der ein Dekorelement 4, beispielsweise aus Keramik, umfasst. Die erste Polyurethanschicht 5 ist transparent und macht somit die Symboliken 2 der bedruckten Folie 9 in der Aussparung 3 (nicht gezeigt) sichtbar. Gemeinsam bilden diese Elemente das erfindungsgemäße polyurethanbasierte Display 1. Das erfindungsgemäße polyurethanbasierte Display 1 bietet eine hohe Variabilität hinsichtlich des Designs eines Gangwahlschalters 10 für Fahrzeuge und eine optisch und haptisch ansprechende Form.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den in den angehängten Ansprüchen definierten Umfang der Erfindung zu verlassen.

### Bezugszeichenliste:

- 1: Polyurethanbasiertes Display
- 2: Symboliken
- 3: Aussparung
- 4: Dekorelement
- 5: Erste Polyurethanschicht
- 6: Zweite Polyurethanschicht
- 7a: Loch
- 7b: Loch
- 8a: Dorn
- 8b: Dorn
- 9: Bedruckte Folie
- 10: Gangwahlschalter

- 100: Verfahrensschritt
- 200: Verfahrensschritt
- 300: Verfahrensschritt
- 400: Verfahrensschritt
- 500: Verfahrensschritt

## Patentansprüche

1. Polyurethanbasiertes Display (1), insbesondere für Fahrzeuge, umfassend:
- ein Dekorelement (4) mit mindestens einer Aussparung (3),
wobei in der Aussparung (3) mindestens eine bedruckte Folie (9) derart angeordnet ist, dass der bedruckte Teil sichtbar ist, wobei die bedruckte Folie (9) mit einer ersten Polyurethanschicht (5) beschichtet ist, **dadurch gekennzeichnet, dass**
das Dekorelement (4) Glas, Holz, Holzfurnier, Keramik, Stein oder eine Kombination daraus umfasst, wobei das Dekorelement (4) Löcher (7b) und/oder Dornen (8a) umfasst, durch die die erste Polyurethanschicht (5) fixiert ist.

2. Polyurethanbasiertes Display nach Anspruch 1, wobei die bedruckte Folie (9) vollständig mit der ersten Polyurethanschicht (5) beschichtet ist.

3. Polyurethanbasiertes Display nach einem der vorhergehenden Ansprüche, **dadurch gekennzeichnet, dass** die bedruckte Folie (9) Abbildungen, Zahlen, Buchstaben oder eine Kombination daraus umfasst.

4. Polyurethanbasiertes Display nach einem der vorhergehenden Ansprüche, **dadurch gekennzeichnet, dass** zwischen der bedruckten Folie (9) und der ersten Polyurethanschicht (5) und/oder zwischen der Aussparung (3) und der bedruckten Folie (9) eine zweite Polyurethanschicht (6) angeordnet ist.

5. Polyurethanbasiertes Display nach einem der vorhergehenden Ansprüche, **dadurch gekennzeichnet, dass**
- eine Verbindung zwischen der bedruckten Folie (9) und dem Dekorelement (4) frei von Klebstoff ist und/oder
- eine Verbindung zwischen der ersten Polyurethanschicht (5) und der bedruckten Folie (9) frei von Klebstoff ist und/oder
- eine Verbindung zwischen der zweiten Polyurethanschicht (6) und dem Dekorelement (4) frei von Klebstoff ist und/oder
- eine Verbindung zwischen der zweiten Polyurethanschicht (6) und der bedruckten Folie (9) frei von Klebstoff ist.

6. Polyurethanbasiertes Display nach einem der vorhergehenden Ansprüche, **dadurch gekennzeichnet, dass** das Dekorelement (4) Löcher (7a) und/oder Dornen (8b) umfasst, durch die die bedruckte Folie (9) fixiert ist.

7. Polyurethanbasiertes Display nach einem der vorhergehenden Ansprüche, **dadurch gekennzeichnet, dass** die erste Polyurethanschicht (5) und/oder die zweite Polyurethanschicht (6) transparent ist.

8. Verfahren zur Herstellung eines polyurethanbasierten Displays (1) nach einem der Ansprüche 1 bis 7, umfassend die Schritte:
a) Vorbereiten (100) des Dekorelements (4) mit einer Aussparung (3);
b) Einbringen (300) der bedruckten Folie (9) in die Aussparung (3) des Dekorelements (4); und
c) Aufbringen (400) der ersten Polyurethanschicht (5) auf die bedruckte Folie (9).

9. Verfahren nach Anspruch 8, wobei die erste Polyurethanschicht (5) so aufgebracht wird, dass sie die bedruckte Folie (9) vollständig bedeckt.

10. Verfahren nach Anspruch 8 oder 9, wobei nach Schritt c) ein Schritt d) zum Schleifen und/oder Polieren der Oberfläche, die aus der ersten Polyurethanschicht (5) in der Aussparung (3) des Dekorelements und dem Dekorelement (4) gebildet wird, ausgeführt wird.

11. Verfahren nach einem der Ansprüche 8 bis 10, wobei das Aufbringen der ersten Polyurethanschicht (5) in Schritt c) mittels Spritzgießen erfolgt.

12. Verfahren nach einem der Ansprüche 8 bis 11, wobei eine zweite Polyurethanschicht (6) vor oder nach Schritt b) in die Aussparung (3) durch Spritzgießen eingebracht wird.

13. Verwendung des polyurethanbasierten Displays (1) nach einem der Ansprüche 1 bis 7 als Anzeigeelement in einer Türverkleidung für Fahrzeuge oder als Anzeigeelement in einem Gangwahlschalter (10) für Fahrzeuge oder als Anzeigeelement in einer Instrumententafel für Fahrzeuge.

14. Fahrzeug umfassend mindestens ein polyurethanbasiertes Display (1) nach einem der Ansprüche 1 bis 7.

## Claims

1. Polyurethane-based display (1), in particular for vehicles, comprising:
- a decorative element (4) having at least one cutout (3),
wherein at least one printed sheet (9) is arranged in the cutout (3) such that the printed part is visible, wherein the printed sheet (9) is coated with a first polyurethane layer (5), **characterized in that**
the decorative element (4) comprises glass, wood, wood veneer, ceramic material, stone or a combination thereof, wherein the decorative element (4) comprises holes (7b) and/or spikes (8a) by means of which the first polyurethane layer (5) is fixed.

2. Polyurethane-based display according to Claim 1, wherein the printed sheet (9) is fully coated with the first polyurethane layer (5).

3. Polyurethane-based display according to either of the preceding claims, **characterized in that** the printed sheet (9) comprises images, numbers, letters or a combination thereof.

4. Polyurethane-based display according to one of the preceding claims, **characterized in that** a second polyurethane layer (6) is arranged between the printed sheet (9) and the first polyurethane layer (5) and/or between the cutout (3) and the printed sheet (9).

5. Polyurethane-based display according to one of the preceding claims, **characterized in that**
- a connection between the printed sheet (9) and the decorative element (4) is free of adhesive and/or
- a connection between the first polyurethane layer (5) and the printed sheet (9) is free of adhesive and/or
- a connection between the second polyurethane layer (6) and the decorative element (4) is free of adhesive and/or
- a connection between the second polyurethane layer (6) and the printed sheet (9) is free of adhesive.

6. Polyurethane-based display according to one of the preceding claims, **characterized in that** the decorative element (4) comprises holes (7a) and/or spikes (8b), by means of which the printed sheet (9) is fixed.

7. Polyurethane-based display according to one of the preceding claims, **characterized in that** the first polyurethane layer (5) and/or the second polyurethane layer (6) are/is transparent.

8. Method for producing a polyurethane-based display (1) according to one of Claims 1 to 7, comprising the following steps:
a) preparing (100) the decorative element (4) with a cutout (3);
b) introducing (300) the printed sheet (9) into the cutout (3) of the decorative element (4); and
c) applying (400) the first polyurethane layer (5) to the printed sheet (9).

9. Method according to Claim 8, wherein the first polyurethane layer (5) is applied such that it fully covers the printed sheet (9).

10. Method according to Claim 8 or 9, wherein step c) is followed by a step d) for grinding and/or polishing the surface which is formed from the decorative element (4) and from the first polyurethane layer (5) in the cutout (3) of the decorative element.

11. Method according to one of Claims 8 to 10, wherein the first polyurethane layer (5) is applied in step c) by means of injection moulding.

12. Method according to one of Claims 8 to 11, wherein a second polyurethane layer (6) is introduced into the cutout (3), by injection moulding, before or after step b).

13. Use of the polyurethane-based display (1) according to one of Claims 1 to 7 as a display element in a door-trim panel for vehicles or as a display element in a gear-selector switch (10) for vehicles or as a display element in an instrument panel for vehicles.

14. Vehicle comprising at least one polyurethane-based display (1) according to one of Claims 1 to 7.

## Revendications

1. Dispositif d'affichage (1) à base de polyuréthane, en particulier pour véhicules, comprenant :
- un élément décoratif (4) avec au moins un évidement (3),
au moins une feuille imprimée (9) étant disposée dans l'évidement (3) de telle sorte que la partie imprimée soit visible, la feuille imprimée (9) étant revêtu d'une première couche de polyuréthane (5), **caractérisé en ce que**
l'élément décoratif (4) comprend du verre, du bois, du placage de bois, de la céramique, de la pierre ou une combinaison de ceux-ci, l'élément décoratif (4) comprenant des trous (7b) et/ou des picots (8a) au moyen desquels la première couche de polyuréthane (5) est fixée.

2. Dispositif d'affichage à base de polyuréthane selon la revendication 1, dans lequel la feuille imprimée (9) est entièrement recouverte de la première couche de polyuréthane (5).

3. Dispositif d'affichage à base de polyuréthane selon l'une des revendications précédentes, **caractérisé en ce que** la feuille imprimée (9) comprend des images, des chiffres, des lettres ou une combinaison de ceux-ci.

4. Dispositif d'affichage à base de polyuréthane selon l'une des revendications précédentes, **caractérisé en ce qu'**une deuxième couche de polyuréthane (6) est disposée entre la feuille imprimée (9) et la première couche de polyuréthane (5) et/ou entre l'évidement (3) et la feuille imprimée (9).

5. Dispositif d'affichage à base de polyuréthane selon l'une des revendications précédentes, **caractérisé en ce que**
- une liaison entre la feuille imprimée (9) et l'élément décoratif (4) est exempte d'adhésif et/ou
- une liaison entre la première couche de polyuréthane (5) et la feuille imprimée (9) est exempte d'adhésif et/ou
- une liaison entre la deuxième couche de polyuréthane (6) et l'élément décoratif (4) est exempte d'adhésif et/ou
- une liaison entre la deuxième couche de polyuréthane (6) et la feuille imprimée (9) est exempte d'adhésif.

6. Dispositif d'affichage à base de polyuréthane selon l'une des revendications précédentes, **caractérisé en ce que** l'élément décoratif (4) comprend des trous (7a) et/ou des picots (8b) au moyen desquels la feuille imprimée (9) est fixée.

7. Dispositif d'affichage à base de polyuréthane selon l'une des revendications précédentes, **caractérisé en ce que** la première couche de polyuréthane (5) et/ou la deuxième couche de polyuréthane (6) est transparente.

8. Procédé de fabrication d'un dispositif d'affichage à base de polyuréthane (1) selon l'une quelconque des revendications 1 à 7, comprenant les étapes consistant à :
a) préparer (100) l'élément décoratif (4) avec un évidement (3) ;
b) mise en place (300) de la feuille imprimée (9) dans l'évidement (3) de l'élément décoratif (4) ; et
c) application (400) de la première couche de polyuréthane (5) sur la feuille imprimée (9).

9. Procédé selon la revendication 8, dans lequel la première couche de polyuréthane (5) est appliquée de manière à recouvrir entièrement la feuille imprimée (9).

10. Procédé selon la revendication 8 ou 9, dans lequel, après l'étape c), on réalise une étape d) de ponçage et/ou de polissage de la surface formée par la première couche de polyuréthane (5) dans l'évidement (3) de l'élément décoratif et l'élément décoratif (4).

11. Procédé selon l'une des revendications 8 à 10, dans lequel l'application de la première couche de polyuréthane (5) à l'étape c) est réalisée par moulage par injection.

12. Procédé selon l'une des revendications 8 à 11, dans lequel une deuxième couche de polyuréthane (6) est appliquée dans l'évidement (3) par moulage par injection avant ou après l'étape b).

13. Utilisation du dispositif d'affichage à base de polyuréthane (1) selon l'une des revendications 1 à 7 en tant qu'élément d'affichage dans un panneau de porte pour véhicule ou en tant qu'élément d'affichage dans un sélecteur de vitesse (10) pour véhicule ou en tant qu'élément d'affichage dans un tableau de bord pour véhicule.

14. Véhicule comprenant au moins un écran à base de polyuréthane (1) selon l'une des revendications 1 à 7.
